# EUROPEAN PATENT SPECIFICATION

(11) **EP 2 272 756 B1**
(45) Date of publication and mention of the grant of the patent: **12.07.2017**
(21) Application number: 09738255.0
(22) Date of filing: 13.03.2009
(51) Int. Cl.: B64D 13/06, B64D 41/00

(54) **SYSTEM FOR CONTROLLING PRESSURISATION, VENTILATION AND AIR CONDITIONING IN AN AIRCRAFT**
SYSTEM ZUR STEUERUNG VON DRUCKAUSGLEICH, VENTILATION UND KLIMATISIERUNG IN EINEM FLUGZEUG
SYSTÈME POUR COMMANDER LA PRESSURISATION, LA VENTILATION ET LE CONDITIONNEMENT DE L'AIR D'UN AÉRONEF

(30) Priority: 30.04.2008 ES 200801250
(43) Date of publication of application: 12.01.2011
(73) Proprietor: Airbus Operations S.L., 28906 Getafe, Madrid (ES)
(72) Inventor: CASADO MONTERO, Carlos, E-28906 Getafe (Madrid) (ES); CASADO ABARQUERO, Hugo, E-28906 Getafe (Madrid) (ES)
(74) Representative: Carpintero Lopez, Francisco
(86) International application number: PCT/ES2009/000143
(87) International publication number: WO 2009/133218

(56) References cited:
- EP-A2- 1 630 099
- EP-A2- 1 630 099
- EP-A2- 1 860 026
- EP-A2- 1 860 026
- US-A- 3 711 044
- US-A- 3 711 044
- US-A- 4 684 081
- US-A1- 2002 113 167
- US-A1- 2002 113 167
- US-A1- 2004 129 835
- US-A1- 2004 129 835
- US-A1- 2005 051 668
- US-A1- 2005 051 668

## Description

### OBJECT OF THE INVENTION

As stated in the title of this specification, the present invention relates to a control system for pressurization, ventilation and air conditioning of an aircraft, which at least consists of pneumatic air conditioning kits (PACK) and electrically fed independent pneumatic compressors (CAC); the main object of which is to reduce the number of CACs, in such a way that the weight of the aircraft is reduced and the reliability of the system is increased.

To achieve this, the invention eliminates two of the CACs in such a way that when a fault is produced in one of the remaining CACs its functioning is taken over by the auxiliary power unit (APU) conventionally included in aircraft.

### BACKGROUND OF THE INVENTION

Traditionally, a commercial aircraft, whether large capacity or of smaller size, is pneumatically fed for the pressurization, ventilation, conditioning and renovation of the air in an aircraft, by means of the air extracted ("bled") from one of the stages of the compressor from the main engines during the greater part of the flight phases of the aircraft.

Current-day commercial aircraft typically include (with the exception of the B787 which now incorporates unbled engines) two or more main engines which feed some pneumatic air conditioning kits (PACK).

During operation on the ground with the aircraft parked and the main engines switched off, it is the APU which supplies the electrical and pneumatic power for the ventilation and conditioning of the air in the aircraft cabin (cabin being understood to be the volume enclosed between the pressure bulkheads, suitable for passengers and crew and which is able to be pressurized at altitude) during the operations of refueling, boarding and disembarking of passengers, replenishment of provisions and consumables for the following flights, loading and unloading, cleaning, maintenance tasks on the aircraft, etc., without overlooking the actual start-up of the main engines either electrically or pneumatically.

In no case is the APU included as an essential system in the certification of the aircraft apart from some exceptions such as ETOPS flights (Extended-range Twin-engine Operation Performance Standards) and operating conditions with a component declared to be failed. A control system for pressurization, ventilation and air conditioning of an aircraft is known by EP1630099. There are many aspects backing up the traditional configuration: safety, reliability and a complete capacity are far as actions are concerned. On the other hand, the extraction of air from the main flow of the engine reduces the thrust that the engine can deliver by a not negligible amount, above all in phases of the flight such as take-off. For that reason, possible options are currently being revised that would make the aircraft a more energy efficient element, and in particular its pneumatic system.

The new technologies offer a set of alternative architectures aimed at what has been referred to as more electrical concepts. This suggests the elimination of the bleed air ports of the main engines, which are now focused on the purely electrical supply (electrical generation) and in some options are replaced by electrically fed pneumatic independent compressors (CAC). To achieve this, each PACK is connected to two electrically fed pneumatic independent compressors (CAC) in order to carry out the pneumatic feed for those PACKs. Therefore, the CACs are duplicated, forming a redundant pneumatic feed configuration in which a functioning failure of one CAC, out of the two that are feeding a PACK, is dealt with by an increase in the power of the operational CAC without a degraded flight situation from being generated, which would force the crew to direct themselves to an alternative airport as an emergency condition or to go over to a flight condition different from the one initially predefined. This configuration permits its certification without the need for any other pneumatic component such as might be the APU. Moreover, the conventional configuration normally includes an auxiliary power unit (APU), which is provided for supplying electrical power, pneumatic power or both, generally for use on the ground, functions which are carried out by the main engines. A large part of the APUs could also supply these in-flight powers, generally focused on strengthening the electrical and pneumatic generation when one of the generation systems fails. The APU for the aircraft with the more electrical configuration continues to play the same role as in the more conventional configuration though now it just supplies electrical power and not pneumatic, permitting the aircraft to continue to possess autonomy on the ground without the need to start up any of the main engines or be fed by means of ground services, in other words, it continues not to have any relevant role in the certification of the aircraft apart from for the cases mentioned earlier.

Therefore, in the most electric architectures, there exists duplication of the CACs which provide a larger number of these components, higher operating cost, greater weight of the aircraft and lower reliability of the ventilation system.

### DESCRIPTION OF THE INVENTION

In order to achieve the objectives and solve the drawbacks stated above, the invention has developed a novel control system for pressurization, ventilation and air conditioning in an aircraft, which, as with those provided for in the state of the art, consists of pneumatic air conditioning kits (PACK), electrically fed independent pneumatic compressors (CAC), an auxiliary power unit (APU), with pneumatic compressor and at least one electrical power generator, and means of pneumatic distribution for pneumatically feeding the PACKs.

The principal novelty of the invention lies in the fact that the duplication of the CACs is eliminated, there remaining one per PACK, and therefore with two CACs that are connected to an independent CACs controller; the APU is dimensioned for feeding each PACK independently or jointly in the operations of the aircraft both on the ground and in flight, and said APU is connected to an independent APU controller; and the PACKs are connected to an independent PACKs controller. It furthermore includes a central controller that is connected to the independent CACs controller, to the independent APU controller and to the independent PACKs controller, so that the PACKs are individually fed by a source selected from between a CAC and the APU, and in such a way that the feeding of a single PACK or the feeding of several PACKs can be carried out.

Moreover, the central controller is connected to an electrical system of the aircraft which governs the demand and distribution of electrical power in the system.

This configuration has the major advantage that just two CACs are used instead of four as is conventionally done, which reduces the number of CACs, the weight of the aircraft, its operating cost, and also, by reducing the number of components, the general reliability of the system is increased without reducing the tolerance of the CACs to failure, since their function can be replaced by the APU.

As has been mentioned, the PACKs can be fed individually by a CAC or by the APU, such that, for in-flight operation, each PACK is fed by a CAC. If a fault occurs in a CAC in this situation and it becomes inoperative, it is detected by the independent controller which communicates this to the central controller, so that it carries out a change of supply, with the PACK whose CAC has failed coming to be supplied by means of the APU, an operation that is carried out in a manner that is can be selected from between manual and automatic, in other words, it can be executed directly by the central controller or manually by acting on the latter, or directly on the APU.

The invention provides that the sizing of the APU is done such that, for the case in which each CAC is pneumatically feeding a PACK and one of the CACs becomes inoperative, the APU provides at least the pneumatic power to the PACK with which it was being fed by the inoperative CAC in an equivalent measure that will not degrade the operation of the aircraft both on the ground and in flight, in other words, that the pressurization capacity of the cabin and of the maintenance of the ventilation and temperature requirements in the cabin are not penalized; with provision also being made that the APU should provide the necessary pneumatic power at least under a no-extraction condition of electrical power in the operation of the aircraft in flight.

The independent controller of the auxiliary power unit includes means so that the electrical power generator of the APU can supply at least all the power equivalent to that necessary for feeding the functioning of a CAC and of the independent CACs controller, in the event of failure of the generators of the main engines and in the event that a main engine is inoperative.

The invention provides that the CACs and the PACKs can be located in the end fuselage section or in the belly fairing of the aircraft, which facilitates their maintenance.

Moreover, the invention provides for the APU to be located in the tailcone of the aircraft.

Below, in order to facilitate a better understanding of this descriptive specification and forming an integral part thereof, a single figure is attached in which the object of the invention has been represented by way of illustration and non-limiting.

### BRIEF DESCRIPTION OF THE FIGURE

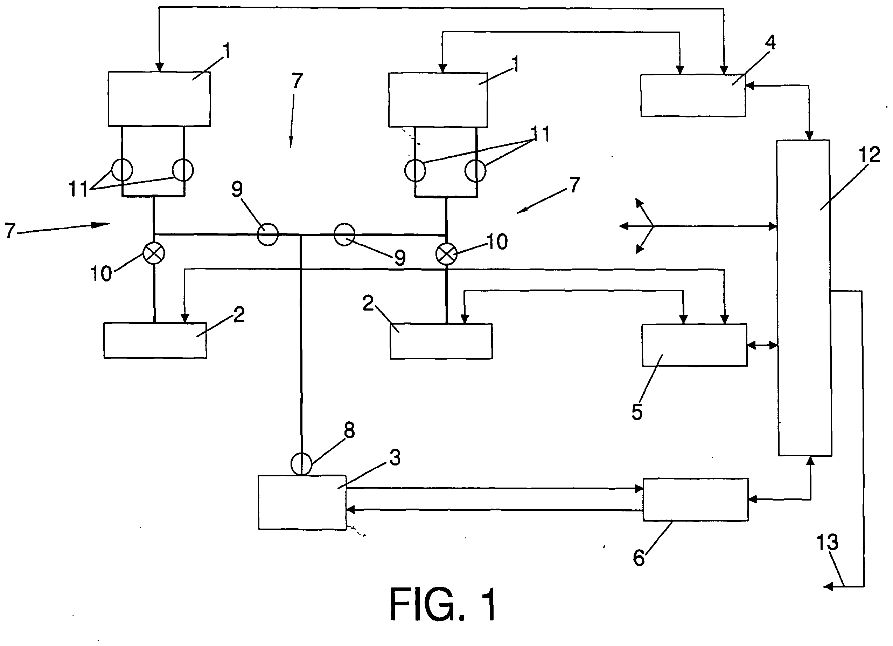

**Figure 1****.-** Shows a functional schematic block diagram of a possible example of embodiment of the system of the invention, in which the connections made in a thick line represent pneumatic connections and those with a fine line are electrical control connections.

### DESCRIPTION OF THE PREFERRED FORM OF EMBODIMENT

Given below is a description of the invention based on the figure commented upon above.

The invention is described for the case of an aircraft containing two pneumatic air conditioning kits (PACK) 1 which carry out the ventilation and air conditioning in the cabin of the aircraft, and each one of which is connected to an electrically fed independent pneumatic compressor (CAC) 2, though some pneumatic distribution means 7 permit a crossed supply, and to an auxiliary power unit (APU) by some pneumatic distribution means 7 in order to carry out the pneumatic feed of the PACKs 1 as will be described further below.

In addition, the PACKs 1 are connected to an independent PACKs controller 4, which is in turn connected to a central controller 12.

The CACs 2 are connected to an independent CACs controller 5, which is also connected to the controller 12.

Moreover, the APU 3 is connected to an independent APU controller 6, which is in turn connected to the central controller 12.

The pneumatic distribution means 7 consist of ducts and valves, as described below.

So, provided at the outlet of the APU is a valve 8 by means of which pneumatic power is permitted to be applied to the ducts of the means 7. In order to carry out the connection of the APU 3 with the PACKs 1, a junction is provided in which are inserted some isolating pneumatic valves 9, whose outlets are connected to the ducts linking up each of the CACs 2 with their respective PACK 1.

Moreover, at the outlet of each of the CACs 2, provision has been made for a valve 10 which permits the pneumatic power application to be carried out to each of the PACKs 1, this feed line also including a flow control valve 11 for each of the branches that it has. At this point it can be stated that the flow control valves 11 can be eliminated without changing the functionality of the architecture that is described, since its function consists of regulating the flow of air to the inlet of the PACK 1, which is a function that can also be performed by each of the CACs 2 by means of their velocity regulation, as is known in some conventional systems.

So, for example, in the in-flight operations of the aircraft, each one of the CACs 2 feeds its corresponding PACK 1, for which the central controller 12 maintains the isolating pneumatic valves 9 and the valves 8 closed, while the valve 10 are to be found open and the flow control valves 11 are kept with the appropriate opening for providing the flow of air required by each one of the PACKs 1 under these normal in-flight functioning conditions. If one of the CAC 2 becomes inoperative, this is detected by the independent CACs controller 5, which communicates this to the central controller 12 and the latter closes the corresponding valve 10 of the inoperative CAC 2 and opens the valve 8 along with the isolating pneumatic valve 9 corresponding to the PACK 1 whose CAC 2 has become inoperative, in such a way that it is the APU 3 which provides the pneumatic power to the PACK 1, in other words, it carries out the reserve equipment functions, unlike what is done in the state of the art in which this functionality is replaced by the CAC that remains operative (not represented due to not belonging to the invention).

The central controller 12 can carry out this functionality automatically, or it can provide a signal for it to be activated manually, and perform the said functionality, or even for the process of change of feed to be carried out manually by acting independently on each one of the pneumatic feed sources 2 and 3.

When a failure occurs in the functioning of a PACK 1, this is detected by the independent PACKs controller 4 which signals this to the central controller 12 in such a way that the latter communicates this to the independent CACs controller 5 which disables the functioning of the CAC 2 that was feeding the PACK 1 that has gone over to the inoperative state.

For the case in which the aircraft is operating on the ground, it is the APU 3 which supplies the pneumatic power, for which its functioning is regulated by the independent APU controller 6 and the central controller 12 maintains the valves 10 closed, and the valve 8 and the isolating pneumatic valves 9 open. It also maintains the proper position of the flow control valves 11 at the required level of pneumatic flow for being applied to each PACK 1.

On the basis of the description made, it is understood that the APU 3 has to be sized so as to provide pneumatic power to a PACK 1 in flight or to two PACKs 1 on the ground (in combination with the necessary electrical power on the ground) in an equivalent measure that will not degrade the operation of the aircraft both in ground operational phases and in flight, in other words, in the entire operational envelope of the aircraft.

Furthermore, the APU provides at least the necessary pneumatic power without the simultaneous extraction of electrical power in the operation of the aircraft in flight, in such a manner that it just carries out the pneumatic feed of the PACKs 1, with the electrical feed being carried out by means of an electrical system of the aircraft (not represented), which governs the demand and distribution of electrical power by the aircraft, and which is connected to the central controller 12 by means of a connection 13.

So, for example, the electrical power generation system can consist of the main generators of the main engines, with one or two being able to be installed in such a way that in the event of failure of the generators of one of the main engines, or of a generator of each engine if two are installed per engine, and in the case of an inoperative main engine, provision is also made for the possibility that the electrical power generator of the APU can supply at least all the electrical power equivalent to that necessary for supplying the functioning of a CAC 2 and of the independent CACs controller 5, for which the independent APU controller 6 includes means so that the electrical power generator of the APU can supply said equivalent power that has been mentioned.

In normal operation on the ground, the pneumatic feed of the PACKs can also be done by means of the CACs in which case one would act in a manner similar to that described for the above cases, for which in this case the CACs can be electrically fed by the electrical power generator of the APU 3, by an external source of the airport, or by the main generators of the engine, always provided that one of them is switched on.

In an embodiment of the invention, provision is made for the CACs and the PACKs to be located in the end fuselage section, while the APU 3 is located in the tailcone of the aircraft.

In another embodiment of the invention, the CACs 2 and the PACKs 1 are located in the belly fairing area of the aircraft , and the APU 3 is, as in the above case, located in the tailcone of the aircraft.

## Claims

1. CONTROL SYSTEM FOR PRESSURIZATION, VENTILATION AND AIR CONDITIONING OF AN AIRCRAFT, which includes pneumatic air conditioning kits (PACK) (1), electrically fed independent pneumatic compressors (CAC) (2), an auxiliary power unit (APU) (3) with pneumatic compressor and with at least one electrical power generator, and pneumatic distribution means (7) for pneumatically feeding the pneumatic air conditioning kits (PACKs) (1); wherein it consists of two electrically fed independent pneumatic compressors (CACs) (2), which are connected to an independent CACs controller (5); an auxiliary power unit (APU) (3) sized for feeding the pneumatic air conditioning kits (PACK) (1) in a manner selected between independent or in connection with the operations of the aircraft both on the ground or in flight, which is connected to an independent APU controller (6); an independent controller of pneumatic air conditioning kits PACKs (4), and a central controller (12) connected to the independent CACs controller (5), to the independent (APU) controller (6) and to the independent controller of the pneumatic air conditioning kits (PACKs) (4), so that the pneumatic air conditioning kits (PACKs) (1) can be individually fed by a source selected from between an electrically fed independent pneumatic compressor (CAC) (2) or the auxiliary power unit (APU) (3) to either one PACK (1) or a plurality of PACKs (1); the central controller (12) being connected to an electrical system of the aircraft which governs the demand and distribution of electrical power of the aircraft.

2. CONTROL SYSTEM FOR PRESSURIZATION, VENTILATION AND AIR CONDITIONING OF AN AIRCRAFT, according to claim 1, wherein the independent CACs controller (5) is adapted to detect a fault which may occur in any of the independent pneumatic compressors (CAC) (2) when it becomes inoperative, and to communicate the detected fault to the central controller (12), and wherein the central controller (12) is adapted to carry out a change of pneumatic supply, in such a manner that the pneumatic air conditioning kits (PACK) (1) whose the independent pneumatic compressors (CAC) (2) has failed, is supplied by means of the auxiliary power unit (APU) (3).

3. CONTROL SYSTEM FOR PRESSURIZATION, VENTILATION AND AIR CONDITIONING OF AN AIRCRAFT, according to claim 1, wherein a change of pneumatically feeding a pneumatic air conditioning kit (PACK) (1) by means of an associated independent electrically fed independent pneumatic compressor (CAC) (2), when fed by means of the auxiliary power unit (APU) (2), is carried out in a manner selected between manual or automatic.

4. CONTROL SYSTEM FOR PRESSURIZATION, VENTILATION AND AIR CONDITIONING OF AN AIRCRAFT, according to claim 1, wherein the independent controller of the auxiliary power unit (APU) (6) includes means so that the electrical power generator of the auxiliary power unit (APU) can supply at least all the power equivalent to that necessary for feeding the functioning of some electrically fed independent pneumatic compressors (CAC) (2) and their independent (CAC) controller (5), in the event of failure of the generators of the main engines and in the event of a main engine being inoperative.

5. CONTROL SYSTEM FOR PRESSURIZATION, VENTILATION AND AIR CONDITIONING OF AN AIRCRAFT, according to claim 1 wherein the electrically fed independent pneumatic compressors (CAC) (2) and the pneumatic air conditioning kits (PACKs) (1) are located in a position selected from between the end fuselage section and the belly fairing area of the aircraft, the auxiliary power unit (APU) (2) being located in the tailcone of the aircraft.

## Patentansprüche

1. Kontrollsystem für Druckaufbau, Belüftung und Klimatisierung eines Flugzeugs, welches enthält
pneumatische Kühlturbinen (PACK) (1), elektrisch gespeiste unabhängige pneumatische Kompressoren (CAC) (2), ein Hilfstriebwerk (APU) (3) mit pneumatischem Kompressor und mit zumindest einem Stromerzeugungsgenerator, und pneumatische Verteilungsmittel (7) zum pneumatischen Speisen der pneumatischen Kühlturbinen (PACKs) (1); wobei es aus zwei elektrisch gespeisten unabhängigen pneumatischen Kompressoren (CACs) (2) besteht, die mit einer unabhängigen CACs-Steuerung (5) verbunden sind; ein Hilfstriebwerk (APU) (3) dimensioniert zum Speisen der pneumatischen Kühlturbinen (PACKs) (1) in einer Weise ausgewählt zwischen unabhängig oder in Verbindung mit dem Betrieb des Flugzeugs sowohl auf dem Grund oder im Flug, das mit einer unabhängigen APU-Steuerung (6) verbunden ist; eine unabhängige Steuerung von pneumatischen Kühlturbinen PACKs (4), und eine zentrale Steuerung (12), die mit der unabhängigen CACs-Steuerung (5) verbunden ist, zu der unabhängigen (APU) Steuerung (6) und zu der unabhängigen Steuerung der pneumatischen Kühlturbinen (PACKs) (4), so dass die pneumatischen Kühlturbinen (PACKs) (1) unabhängig durch eine Quelle ausgewählt von zwischen einem elektrisch gespeisten unabhängigen pneumatischen Kompressor (CAC) (2) oder dem Hilfstriebwerk (APU) (3) gespeist werden können, zu entweder einer PACK (1) oder einer Vielzahl von PACKs (1); wobei die zentrale Steuerung (12) mit einem elektrischen System des Flugzeugs verbunden ist, welches den Bedarf und Verteilung von elektrischer Leistung des Flugzeugs regelt.

2. Kontrollsystem für Druckaufbau, Belüftung und Klimatisierung eines Flugzeugs, nach Anspruch 1, wobei die unabhängige CACs-Steuerung (5) angepasst ist, einen Fehler zu detektieren, welcher in irgendeinem der unabhängigen pneumatischen Kompressoren (CAC) (2) auftreten kann, wenn er funktionsunfähig wird, und um den detektierten Fehler zu der zentralen Steuerung (12) zu kommunizieren, und wobei die zentrale Steuerung (12) angepasst ist, einen Wechsel der pneumatischen Versorgung auszuführen, in einer solchen Weise, dass die pneumatischen Kühlturbinen (PACKs) (1), deren unabhängige pneumatische Kompressoren (CAC) (2) ausgefallen ist, mittels des Hilfstriebwerks (APU) (3) versorgt wird.

3. Kontrollsystem für Druckaufbau, Belüftung und Klimatisierung eines Flugzeugs, nach Anspruch 1, wobei ein Wechsel des pneumatischen Versorgens einer pneumatischen Kühlturbine (PACK) (1) mittels eines zugeordneten unabhängig elektrisch gespeisten unabhängigen pneumatischen Kompressors (CAC) (2), wenn mittels des Hilfstriebwerks (APU) (2) versorgt, in einer Weise ausgewählt zwischen manuell oder automatisch ausgeführt wird.

4. Kontrollsystem für Druckaufbau, Belüftung und Klimatisierung eines Flugzeugs, nach Anspruch 1, wobei die unabhängige Steuerung des Hilfstriebwerks (APU) (6) Mittel enthält, so dass der Stromerzeugungsgenerator des Hilfstriebwerks (APU) zumindest all jene Leistung bereitstellen kann, die zu jener äquivalent ist, die zum Speisen des Funktionierens von einigen elektrisch gespeisten unabhängigen pneumatischen Kompressoren (CAC) (2) und ihrer unabhängigen (CAC) Steuerungen (5) notwendig ist, im Fall von Versagen der Generatoren der Haupttriebwerke und in dem Fall, dass ein Haupttriebwerk funktionsunfähig ist.

5. Kontrollsystem für Druckaufbau, Belüftung und Klimatisierung eines Flugzeugs, nach Anspruch 1 wobei die elektrisch gespeisten unabhängigen pneumatischen Kompressoren (CAC) (2) und die pneumatischen Kühlturbinen (PACKs) (1) an einer Position angeordnet sind, die ausgewählt ist von zwischen dem Endbereich der Kabine und dem Bauchverkleidungsbereich des Flugzeugs, wobei das Hilfstriebwerk (APU) (2) in der hinteren Rumpfsektion, Tailcone, des Flugzeugs angeordnet ist.

## Revendications

1. SYSTEME POUR COMMANDER LA PRESSURATION, LA VENTILATION ET LE CONDITIONNEMENT D'AIRDANS UN AERONEF comprenant des kits de conditionnement d'air pneumatiques (KCAP) (1) des compresseurs pneumatiques indépendants alimentés électriquement (CAC) (2) une unité auxiliaire de puissance (APU) (3) avec un compresseur pneumatique et au moins un générateur électrique et des moyens pneumatiques de distribution (7) pour alimenter pneumatiquement des kits de conditionnement d'air pneumatiques (KCAPs) (1) qui consiste en deux compresseurs pneumatiques indépendants alimentés électriquement (CACs) (2) qui sont reliés à un organe de commande CAC indépendant (5) ; une unité auxiliaire de puissance APU (3) dimensionnée de façon à alimenter les kits de conditionnement d'air pneumatiques (KCAP) (1) de manière indépendante ou en liaison avec les opérations de l'aéronef soit au sol soit en vol qui est relié à un organe indépendant de commande d'APU (6) ; un organe de commande indépendant de kits de conditionnement d'air pneumatiques KCAP (4) et un organe de commande central (2) relié à l'organe de commande indépendant CACs (5) et à l'organe de commande indépendant d'APU (6) et à l'organe de commande indépendant de kits de conditionnement d'air pneumatiques KCAP (4) de telle sorte que les kits de conditionnement d'air pneumatiques KCAPs (1) puissent être alimentés individuellement par une source choisie entre un compresseur pneumatique indépendant alimenté électriquement (CAC) (2) ou l'unité auxiliaire de puissance (APU) (3) ou l'un ou l'autre des KCAP (1) ou une pluralité de KCAPs (1), l'organe de commande central (12) étant relié à un système électrique de l'aéronef qui dirige la demande et la distribution de la puissance électrique de l'aéronef.

2. SYSTEME POUR COMMANDER LA PRESSURISATION LA VENTILATION ET LE CONDITIONNEMENT D'AIR DANS UN AERONEF selon la revendication 1, dans lequel l'organe de commande indépendant CACs (5) est conçu pour détecter un défaut pouvant intervenir dans l'un des compresseurs pneumatiques indépendants CAC (2) quand il devient inopérant et pour transmettre le défaut détecté à l'organe de commande central (12) et dans lequel l'organe de commande central (12) est conçu pour réaliser un changement de fourniture pneumatique de telle sorte que le kit de conditionnement d'air pneumatiques KPAC (1) dont les compresseurs pneumatiques indépendants (CAC) (2) ont fait défaut soit alimenté par l'unité auxiliaire de puissance (APU) (3).

3. SYSTEME POUR COMMANDER LA PRESSURISATION LA VENTILATION ET LE CONDITIONNEMENT D'AIR DANS UN AERONEF selon la revendication 1, dans lequel un changement de l'alimentation pneumatique d'un kit de conditionnement d'air pneumatique (KPAC) (1) au moyen d'un compresseur pneumatique indépendant (CAC) (2) alimenté électriquement lorsque il est alimenté par l'unité auxiliaire de puissance (APU) (2) est réalisé de manière soit automatique soit manuelle.

4. SYSTEME POUR COMMANDER LA PRESSURISATION LA VENTILATION ET LE CONDITIONNEMENT D'AIR DANS UN AERONEF selon la revendication 1 dans lequel l'organe de commande indépendant de l'unité auxiliaire de puissance (APU) (6) comporte des moyens tels que le générateur de puissance électrique de l'unité auxiliaire de puissance (APU) puisse fournir au moins la puissance équivalente à ce qui est nécessaire pour alimenter le fonctionnement de quelques compre'sseurs pneumatiques indépendants alimentés électriquement (CAC) (2) et leur organe de commande (5) indépendant (CAC) en cas de panne des générateurs des moteurs principaux ou en cas où le moteur principal deviendrait inopératif..

5. SYSTEME POUT COMMANDER LA PRESSURISATION LA VENTILATION ET LE CONDITIONNEMENT D'AIR DANS U8N AERONEF selon la revendication 1 dans lequel les compresseurs pneumatiques indépendants alimentés électriquement (CAC) (2) et les kits de conditionnement d'air pneumatiques (KCAP) (1) sont placés en une position choisie entre la partie arrière du fuselage et la zone de carénage ventral de l'aéronef, l'unité auxiliaire de puissance (APU) (2) étant située dans le cône de queue de l'aéronef.
